# EUROPEAN PATENT APPLICATION

(11) **EP 4 632 671 A1**
(43) Date of publication of application: **15.10.2025**
(21) Application number: 24169307.6
(22) Date of filing: 09.04.2024
(51) Int. Cl.: G06T 7/00

(54) **METHOD OF ANALYSING TUMOURS**

(71) Applicant: SpatialX Diagnostics Ltd, London W11 4JA (GB)
(72) Inventor: Shaker, Noor, London, W11 4JA (GB); Shaker, Nuha, London, W11 4JA (GB)
(74) Representative: Potter Clarkson

(57) **Abstract**

The invention relates to methods of analysing tumours by receiving and identifying regions of interest in image data of tissue anddetermining an infiltration pattern of the regions of interest by reference to a representation created. The method has utility in tumour diagnosis and treatment monitoring and clinical decision making.

## Description

### FIELD OF THE INVENTION

The invention relates to systems and methods for identifying and classifying tumours in image data.

### BACKGROUND TO THE INVENTION

Cancer is an increasingly common affliction across the world. This is primarily because the risk of cancer generally increases with age, and humans are increasingly living longer in both developing and developed countries. As life expectancy rises, the overall incidence of cancer tends to increase. Cancer is difficult and expensive to identify and treat, even for high-income societies with well-funded healthcare systems.

The field of oncology is perpetually challenged by the problem of tumour heterogeneity, that is, the phenomenon that tumours can exhibit differences in various features within themselves or compared to other tumours. These features can influence the behaviour and characteristics of a tumour. In particular, these features can influence the aggressiveness and therefore risk factor of a particular tumour. Some tumours are comparatively benign, meaning that highly intensive treatments like chemotherapy or radiotherapy may be excessive and in fact cause more harm than benefit to the patient due to the known side-effects of such intense treatments. Other tumours are highly aggressive, necessitating intensive treatment or surgery as soon as possible. With highly aggressive tumours, early treatment is critical to increase the survival chances of the patient.

Unfortunately, tumour heterogeneity leads to a wide range of manifestations for tumours, even those of the same cancer type. In addition, as screening becomes more effective, the number of patients with tumours to be assessed continues to increase. As a result, it can be difficult to distinguish between tumors with indolent behavior vs those with a more aggressive course, and thus the most appropriate treatment plan for the patient. This leads to less effective treatment, at both an individual level and on the scale of the whole healthcare system. In the worst scenarios, this results in patients with undiagnosed aggressive tumours going without treatment or being assigned an incorrect treatment for too long, decreasing their survival chances.

Tumour buds are small clusters of cancer cells that have detached from the primary tumour mass and invaded the surrounding tissue. Depending on the tumour stage and clinical scenario, the presence of tumour budding can drive clinical management decisions. In cases of endoscopically resected pT1 colorectal cancer with tumour budding, surgical resection may be warranted due to the increased risk of lymph node metastases. For stage II colorectal cancer with high-grade tumour budding, considering adjuvant therapy becomes important, given its association with shorter disease-free survival. Additionally, the assessment of intra-tumoral budding in pre-operative biopsies may guide decisions on initiating neo-adjuvant therapy, providing insights into potential tumour regression. In essence, tumour budding serves as a valuable factor influencing clinical strategies, including the choice of resection, adjuvant therapy, or neo-adjuvant chemotherapy, depending on the specific clinical context and tumour stage.

Despite the significant prognostic value of tumour budding, it faces challenges in terms of reproducibility and scalability (applying it across the whole tissue sample rather than specific regions). It also relies on a three-tiered scoring system that is prone to subjectivity. Also, the moderate tumour budding score creates ambiguity for clinicians, leading to uncertainty in managing cases falling within this category. These limitations highlight the need for improved standardization and a more refined scoring system in tumour budding assessment to enhance reproducibility and provide clearer guidance for clinical decision-making. Addressing these issues would contribute to a more effective and precise integration of tumour budding information into the management of colorectal cancer patients.

Accordingly, there exists a need for solutions which enable more effective identification, diagnosis, and/or treatment of the diverse spectrum of tumour behaviours.

### SUMMARY OF THE INVENTION

According to a first aspect, there comprises a method of analysing tumours, comprising the steps of: receiving image data of tissue; identifying in the image data one or more regions of interest in the tissue; for each region of interest: identifying one or more tumour cluster in the region of interest matching predetermined criteria; constructing a representation of the region of interest based on relative spatial locations of the one or more tumour clusters or single tumour cell ; and determining an infiltration pattern and score of the region of interest by reference to the representation.

The term "comprises" or "comprising" will take its usual meaning in the art, namely indicating that the component includes but is not limited to the relevant features (i.e. including, among other things). As such, the term "comprises" will include references to the component consisting essentially of (such as consisting of) the relevant features. The term "consists of" or "consisting of" will take its usual meaning in the art, namely indicating that the component includes and is limited to the relevant features.

In recent years, methods for processing image data using machine learning algorithms have been developed. However, processing giga-pixel histopathology images is a computationally expensive task. Multiple instance learning has become the conventional approach to processing such images, in which the images are split into smaller patches for further processing. However, MIL-based techniques ignore explicit information about the tumour growth patterns within a patch and global information about cell interactions are usually lost.

It has been found that spatial patterns in the tumour microenvironment (TME) are conceptually indicative of the end progression of cancer patients. Specifically, the infiltrating pattern at the leading edge of the tumour can be a potential indicator of behaviour, and has been recently associated with disease outcome. The degree of invasiveness when there is heterogeneity of patterns in the tumour makes assessment particularly challenging. The standard pathologic assessment of the leading edge is hindered by the lack of quantitative assessment and wide variability in invasion patterns.

The infiltration pattern characterises a representation of malignant and non malignant cells, types and their spatial arrangements. In particular, the inventors have found that the infiltration pattern of a region of interest can be correlated with the aggressiveness of a tumour and hence the risk level of the tumour. Infiltration patterns can be identified corresponding to classification of tumours infiltrating into surrounding tissue (which is an adverse prognostic factor), which are likely to metastasise and spread to other parts of the body. Capturing malignant and non malignant cell types and their spatial arrangements is crucial for better prognostic and cancer management. For the tumours that are prone to exhibit more variable growth patterns such as pancreatic neuroendocrine tumours, and colorectal adenocarcinomas, the degree of demarcation versus the infiltrative spread of the neoplastic cells at the periphery of the tumour has been found to yield invaluable prognostic information. In fact, this is one of the main determinants of benign versus malignant diagnosis in thyroid neoplasms.

The inventors have recognised that spatial distribution of cells in the TME is not random but is rather associated with the underlying functional state. Therefore, the exploration of the TME of cancer samples offers critical insights into the key spatial patterns associated with the growth, cancer progression, and thus patient prognosis.

Identifying regions of interest in the image data is more efficient than simply splitting the image into patches and processing each in turn, as used in conventional MIL approaches. Not only is it computationally wasteful to process patches of image data which do not contain notable features, but the patches may split up regions of interest, obscuring the key spatial patterns. While splitting image data into patches may preserve information about local spatial arrangement in small areas, important larger-scale and global-scale information about spatial arrangements covering a large portion of the areas of interest will be lost.

By identifying one or more tumour clusters or cells in the region of interest matching predetermined criteria, and then constructing a representation of the region of interest based on relative spatial locations of the one or more cells, the method can provide a computational representation which contains the essential spatial information of the selected cells. Such a representation can be visualised and processed to accurately determine the infiltration pattern.

The representation may be constructed with reference to one or more features of the relative spatial locations of malignant and non malignant cells, including the distance between neighbouring cells, the angle between cells relative to another point, the type of the cells or tissues, the morphological information, distribution or the arrangement of cells as a pattern in the image.

The determination of the tumour infiltration pattern by reference to the one or more infiltration patterns of the regions of interests may be performed using simple statistical methods. Alternatively, more complex deep machine learning techniques may be utilised. The classification may include one or more elements representing: tumour invasiveness, tumour pattern identifier, the patient demographics, tumour grade, tumour stage, treatment, survival, and/or other medical information. In some examples, the representation may be provided to an individual such as a physician using any suitable method, for example the representation may be displayed via a display screen or provided as a printout. The representation of the region of interest allows the individual to more easily see the spatial relationships between cells and surrounding tissues and malignant and non-malignant cell arrangement in the region of interest compared to the raw image data, enabling the individual to identify an infiltration pattern more quickly and accurately.

Compared to existing approaches, the method of the first aspect thus provides a more comprehensive, quantitative, and computationally efficient assessment of relationships between features descriptive of tumour spatial microenvironment spatial arrangement and distribution. This in turn enables the method to classify tumour image data more quickly and accurately and to perform diagnosis and prognosis analysis, correlating extracted spatial features to disease state or outcome.

The method may be implemented using standard machine learning systems, and may operate in a supervised or unsupervised manner. In an exemplary supervised learning system configuration, a labelled training dataset is provided whereby for each sample of image data, infiltration patterns are predetermined and labelled by giving each pattern a unique identifier. The system is trained to learn the infiltration patterns from the labelled datasets. Once trained, the system can be used to identify the learned patterns in new image data.

A supervised learning system may also learn new patterns not necessarily identified in the training dataset. This is done by providing the system with information about the image data and associated patient data. Patient data can include demographic information as well as treatments and responses, tumour grade, tumour stage, survival data and disease outcome. The supervised learning system learns the associations between infiltration patterns and patients' endpoints.

In an exemplary unsupervised learning system configuration, the unsupervised learning system is trained to identify known and/or new infiltration patterns without providing the system with annotated training dataset containing labelled patterns. Instead, the system learns in an unsupervised setting whereby new patterns can be identified based on patterns similarity and dissimilarity and later used to study their relevance. The newly identified patterns can be visually inspected by pathologists or by another system that learns to associate these patterns with patient outcomes.

Exemplary machine learning methods include: decision trees; support vector machines; single or multi-layer perceptron; generative or adversarial networks; autoencoders; inception; Monte Carlo tree search models; Residual Neural Networks; Self-organizing maps; transformer-based models; Graph Convolutional Neural Networks; Graph models, and graph to graph autoencoders.

The training dataset containing the image data may additionally comprise biomedical images labelled or unlabelled with infiltration pattern categories and/or patient information or categorisation of tumour invasiveness. A dataset containing image data may also comprise omics data, medical history, demographic data, selected treatment approach, etc. This could be provided along with the representation in order to identify or correlate the infiltration patten with disease diagnosis or prognosis.

Optionally, each region of interest comprises a tumour edge region. A tumour edge region refers to the outer boundary or perimeter of a tumour, where the cancer cells of the tumour interact with the surrounding benign issues. Suitably the tumour edge region may be defined by a pathologists or considered as the area between the boundary of the outer tumour cells and a specific distance outwards from said outer boundary or perimeter. The tumour boundary is a niche composed of malignant cells in the outermost circle of tumour and non-malignant cells that are closely adjacent in spatial architecture, bridging these distinct spatial regions.

Optionally, each region of interest comprises a tumour internal region. As well as analysing and classifying tumour edge regions to determine outwards infiltration of the tumour into surrounding tissue, the method can also be used to identify infiltration patterns of inflammatory infiltration within the tumour. In such implementations, the regions of interest are selected from the area inside the tumour. Each region of interest may represent a potential inflammation site. Creating a representation of each such region of interest enables the infiltration pattern of inflammation within the tumour to be determined. This can be used to predict a risk level for the tumour.

Each representation may represent a segment of the tumour edge region. The tumour edge regions of interest can be connected or disconnected, and may represent the whole or part of the tumour edge shown in the image data. The tumour edge region has been found to be a particularly important region for tumour classification, for several reasons. The tumour edge is where cancer cells may invade (i.e., infiltrate) surrounding tissues, and therefore represents the infiltration edge of the tumour into surrounding tissue. The inventor has found that the amount, depth and composition of such infiltration can be used to identify and classify the tumour and may have clinical significance. Furthermore, factors such as immune cell infiltration, blood vessel formation (angiogenesis), and extracellular matrix composition can vary at the tumour edge and impact cancer cell behaviour, tumour severity and outcome.

Optionally, the representation comprises a graph structure comprising: a set of nodes, each node representing a subset of the one or more malignant and non malignant identified cells, and a set of edges, each edge being constructed between a pair of nodes based on the type and the relative spatial location of the one or more cells.

A subset may be a single cell, such that the node represents a single cell. Alternatively, a subset may contain several cells. A node may thus represent a tumour bud or other clustered arrangement of cells. This may allow a node to represent a closely packed arrangement of cells such as a tumour bud. Alternatively or additionally, by representing clusters of cells as nodes, the method can be used to process image data which is high-resolution, or which is zoomed out to an extent that clusters of cells can be discerned but individual cells cannot.

In some examples, the edges between nodes are drawn based on a thresholding approach. That is, the distance between the spatial locations of the cells represented by a first node and those represented by a second node is calculated. If this distance is less than a predetermined threshold, then an edge is drawn between the first and second nodes. This is repeated for all pairs of nodes in the representation, resulting in a completed graph structure. The graph structure may comprise a single interconnected graph, or it may comprise a plurality of discontinuous sub-graphs.

Optionally, identifying one or more cells in the region of interest matching predetermined criteria comprises identifying a cell type for each cell. At the simplest level, the cell type may be identified as either "tumour cell" or "non-tumour cell" e.g. epithelial, fiboblasts, smooth muscles, blood vessles, goblet cells, etc.

Optionally, the method further comprises the step of processing the image data by marking a cell type of cells in the image data. This may be done by annotating the image data automatically or manually. In some examples, the image data is marked during a pre-processing step, before any regions of interest are identified. In other examples, the image data is only marked in the regions of interest, i.e. after the regions of interest have been identified.

Optionally, the method further comprises the step of segmenting the tissue by identifying tissue modalities associated with the one or more identified cells.

Optionally, a representation is constructed for each cell type or tissue modality. For example, a first representation may be constructed for cells in the region of interest which are identified as tumour cells, and a second representation may be constructed for cells in the region of interest which are identified as tissues. The infiltration pattern may be determined with reference to an individual or a combination of these representations.

Optionally, the method further comprises the step of identifying visual features of the one or more cells in the region of interest. The identified visual features of the one or more cells in the region of interest may include any combination of the morphology, density, colour, and arrangement of the cells. Identifying visual features of the cells may be used to classify the cell type or tissue modality of the cell. For example, tumour cells may be differently shaped or coloured compared to normal tissue cells. 3D coordination of the cells in the volume of tissue can also be incorporated in the representation.

Optionally, the method further comprises the step of generating, for a subset of the one or more cells in the region of interest, an embedding vector representing one or more of the visual, local ,or global location, genomic, molecular or other genetic features of the subset. The embedding vector may enable these features of the cell to be associated with a location or node in the representation, enabling a user or processing system to more easily cross-reference the features of a cell represented by that portion of the representation. The data in the embedding vector may also be used to further characterise the subset or the region of interest, enabling the behaviour of a tumour to be more accurately predicted.

Genomic data represented by the embedding vector may include gene expression data, such as the type and prevalence of certain RNA sequences in the subset. The embedding vector may also represent other modalities such as molecular or biological associations. Such data may be collected for subsets of the region of interest, or across the region of interest as a whole. In some examples, genomic data may be captured using spatial transcriptomics, allowing gene expression or genomic data to be associated with individual cells or other small spatial regions. In some examples, genomic data for generating the embedding vector is received from an external source.

The one or more cells may be divided into subsets. As previously discussed, each subset may represent a single cell, or a plurality of cells. An embedding vector may be generated for each cell or subset. The embedding vector(s) may be associated with a location or node in the representation corresponding to the same subset of cells.

Optionally, identifying visual features of the one or more cells from the image data comprises using a preidentified, manually selected feature set or a pretrained visual information identification system. The pretrained visual information identification system may comprise a statistical model for feature extraction or a machine learning system such as a convolutional neural network (CNN). This provides improved computational efficiency. Rather than using a single pretrained system to identify features and also determine the infiltration pattern, a specialised and pretrained visual information identification system carries out the feature identification task, and then passes this information to another system which determines the infiltration pattern. Each system can be optimised for its assigned task. In some examples, the information for the embedding vector is generated by the visual information identification system.

Optionally, the method further comprises the step of identifying a tumour classification by reference to the one or more infiltration patterns of the regions of interest. The classifications may be predetermined, such that the method classifies the tumour into one of a plurality of risk levels, for example. The classifier (whether automated or a human) may output identification of the tumour cells to identify the tumour boundary and tumour cells at the edge of the tumour. This information may be inputted into another system that categorises the infiltration patterns and correlates the patterns with the severity of a disease condition or treatment outcome.

Providing an automated tumour classifier may enable more objective assessment of tumours. A single system can review and classify all image data according to the same metrics, compared to having a human analysts reviewing separate image data samples and coming to different conclusions. It will be understood that there may comprise a "no tumour" classification, signifying that no tumour cells can be identified in the image data. In other words, the method may be used for tumour detection.

In some examples, identifying a tumour classification may comprise providing a score for tumour invasiveness. The score can be used to correlate inferred patterns with other important histologic features, and for prognostication of patients and placement of patients into appropriate management protocols. In some examples, a tumour invasiveness score may be determined based on the infiltration pattern for each representation. An overall tumour invasiveness score may then be determined by combining these invasiveness scores. The overall score may simply be a mean, median or mode of the invasiveness scores. Alternatively, the overall score may simply be the highest of the invasiveness scores, such that a tumour comprising many low-infiltration regions of interest and one high-infiltration region of interest is still given a high overall infiltration score or it can be a weighted sum or the regions whereby the assigned wights are learnable.

Optionally, identifying regions of interest in the image data comprises processing the image data using a pretrained region identification system. As with the pretrained visual information identification system, a specialised pretrained region identification system may provide improved computational efficiency. The region identification system may be a CNN or other machine learning based system which is designed to identify tumour edge regions, or other regions of the image data.

The identification of regions of interest and the identification of visual features may operate independently or in parallel. For example, the image data may be passed to both the region identification system and visual information identification system, such that the region identification system identifies regions of interest, the visual information identification system identifies visual features of cells. Alternatively, these steps may proceed sequentially. For example, the visual information identification system may be configured to receive information identifying regions of interest in the image data, and then identify visual features of cells within those regions.

Optionally, the method further comprises the step of processing the image data by marking a tissue type of tissues in the image data and adding this information to the embedding or the prediction systems.

Optionally, the image data comprises images of stained tissues for one or multiple biomarkers This increases the visual differentiation between cells, enabling the cell types of the cells in the region of interest to be determined more easily. Tissue staining is commonplace in the art. Tissues can be stained with routine H&E or any other immunohistochemistry stains that provide additional mean to identify cells.

Optionally, the tissue or cell types are identified using a chemical stain.

Optionally, the image data comprises Whole Slide Image data acquired through biopsies or surgical resection. Alternatively or additionally, the image data comprises other biomedical image data such as TMAs (Tissue Microarray data), or other imaging modalities such as radiology images.

Optionally, the method further comprises the step of generating a diagnostic prediction based on the classification of the tumour. Such a diagnostic prediction could include for example, a risk score for a patient, generated from the tumour classification and the demographic profile of the patient. The diagnostic prediction may additionally or alternatively comprise a survival prediction, a mutation prediction, and/or a response prediction for a given treatment regimen.

Optionally, the method further comprises the step of generating a treatment regimen based on the classification of the tumour. This may include a recommendation for a particular course of medication, a surgical procedure, and/or a modification to an existing treatment.

Optionally, the method further comprises the step of generating a diagnostic or prognostic biomarker based on the classification of the tumour.

Depending on the tumour stage and clinical scenario, the presence and patterns of tumour budding can drive clinical decision making. Such information would allow the physician to select the right the treatment or dosage or predict the outcome of specific treatment. The information can also be used to support patient stratification in clinical trial by selecting the patient population that is most likely to respond to a treatment. It may also support clinicians when predicting adverse outcome and selecting the right course of treatment, e.g. chemotherapy, radiofrequency/microwave ablation. As well as a theranostic markers in supporting diagnosis, pre-operative evaluation and management of patients. Also, the method can empower clinicians to make informed decisions regarding neoadjuvant and adjuvant therapies, as well as aid in patient selection for surgical resections versus those who may benefit from local minimally invasive procedures.

The classification method can provide improved outcomes for individual patients, as well as improve efficiency at the level of the healthcare system. For individual patients, the classification method can assist medical professionals in providing more accurate diagnoses of cancer type or invasiveness, enabling them to select the most effective and appropriate monitoring or treatment regimen. Healthcare systems can therefore allocate resources more effectively, improving patient outcomes overall.

Additionally, the classification method can facilitate research and development of new treatments for cancer. One challenge when developing new cancer treatments is conducting accurate experimental validation. If the test samples have been incorrectly identified, then the efficacy of the treatment is more difficult to evaluate or the treatment might be evaluated as ineffective, when indeed the selected patient cohort compromises poor or non-responders, or as generally effective when the test cohort is all responders. For example, if a treatment is tested on an aggressive tumour which has been incorrectly classified as less aggressive, then the effect of the treatment may be different than expected, leading researchers to disregard a potentially effective treatment. The method can be used to classify tumours more accurately, improving the quality of selecting the test sample groups. Another use for the technology is selecting the right patient population- pateint stratification- for a clinical trail to test the effectiveness of a treatment based or predicted response. A population of patients that are likely to respond to the treatment can be identified as opposite to patients with the disease but with poor response. This also helps marketing treatments under development targeting only patients where the treatment can be effective.

In a second aspect, there comprises a data processing device configured to carry out the method of any preceding aspect.

In a third aspect, there comprises a computer-readable storage medium containing instructions for causing the device of the second aspect to carry out the method of any previous aspect.

The term "patient" may refer to a human patient. As such, the source of the image data may be from a human patient. However, it will be understood that the method may also be performed in respect of an animal subject or other test subject.

### BRIEF DESCRIPTION OF THE DRAWINGS

Figures 1(a)-(b) illustrate process flow diagrams for carrying out an exemplary method.
Figures 2(a)-(c) are views of a section of a Whole Slide Image, showing exemplary cell types and distances therebetween.
Figures 3(a)-(f) illustrate an exemplary method for generating a graph representation from image data: Figure 3(a) shows a WSI image; Figure 3(b) shows a region of interest; Figure 3(c) shows the region of interest segmented by cell type; Figure 3(d) shows an initial spatial graph corresponding to the region of interest; Figure 3(e) shows the initial spatial graph with edges added, and Figure 3(f) shows the final graph representation.
Figure 4 illustrates how cells and tissues within a region of interest can be identified within a Whole Slide Image using a machine learning system. It also shows a machine learning fingerprint representation for each modality of interest.
Figure 5 illustrates an exemplary Whole Slide Image which has been segmented by cell/tissue type.
Figure 6 illustrates an exemplary system configured to carry out the method of calculating the representation of cells or regions of interests.
Figure 7 illustrates graph representations corresponding to different tumour edge regions.
Figure 8 illustrates a schematic block diagram of an exemplary data processing device for carrying out the method.

### DETAILED DESCRIPTION

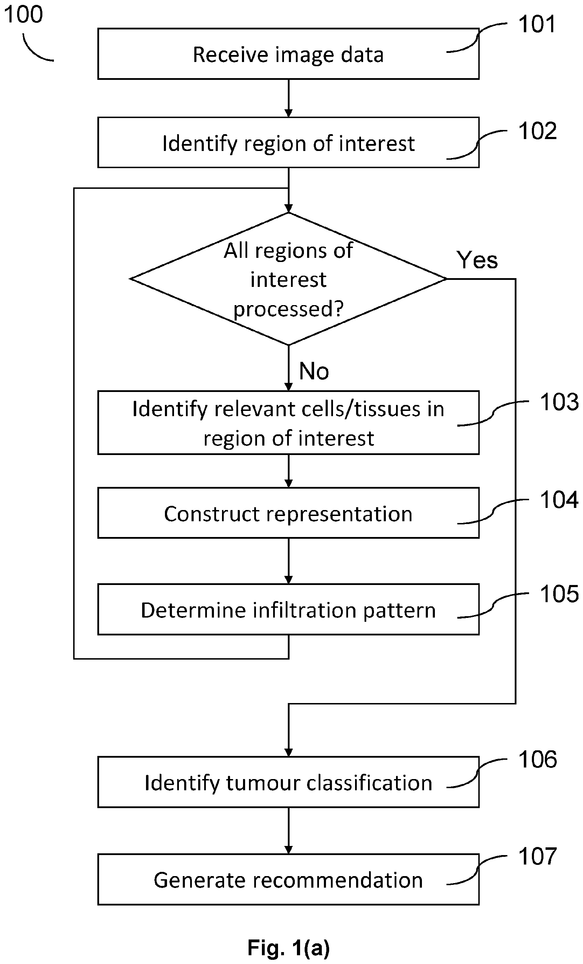

An exemplary method 100 for determining the infiltration pattern of a tumour is described with reference to Figures 1(a)-(b).

Firstly, image data is received 101. If the image data comprises a plurality of images, then the method 100 is repeated for each image.

Regions of Interest (RoI) are then identified 102 in the image data. In this example it is assumed that the received image data contains a potential tumour and hence at least one region of interest. Each region of interest may correspond to a tumour edge region or an area of interest within the tumour, as previously described. Identification 102 of regions of interest may be performed manually or by a pretrained region identification system.

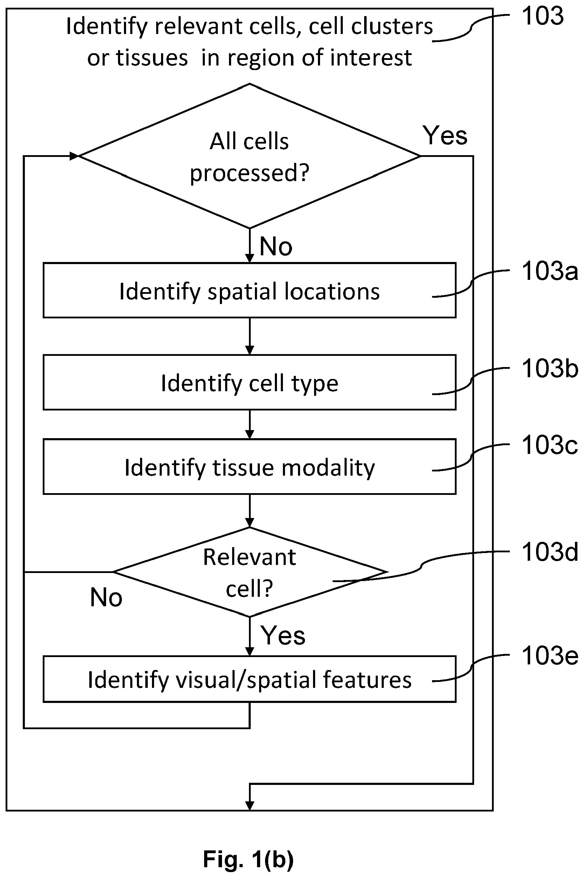

The relevant cells are identified 103 within each of the identified regions of interest. Relevant cells are cells within the region of interest which match predetermined criteria. Figure 1b illustrates sub-steps of step 103. In step 103a, a spatial location of each cell is identified. In this example, a cell type and if applicable a tissue modality are also identified 103b, 103c for each region. The cell type, spatial location and tissue modality identified are assessed 103d against predetermined criteria. If the cell matches the predetermined criteria (e.g. the cell is located exterior to the tumour edge, and is a tumour-type cell), then the cell is recorded as a relevant cell and the identified features of the cell are stored. Alternatively, identification 103e of visual features of cells may be performed by a pretrained visual information identification system, and may be performed in parallel with other steps. In such examples, the visual and/or local features for a relevant cell are received from the pretrained visual information identification system and may be stored along with the other features of the cell.

Steps 103a-e are repeated for each cell in a region of interest or one model can be used to process the image and segment all cells into categories.

A representation is then constructed 104 for the region of interest based on the relative spatial locations of the relevant cells or a subset thereof. An exemplary subset could be all relevant cells which match the predetermined criteria indicating that the cell is a tumour cell.

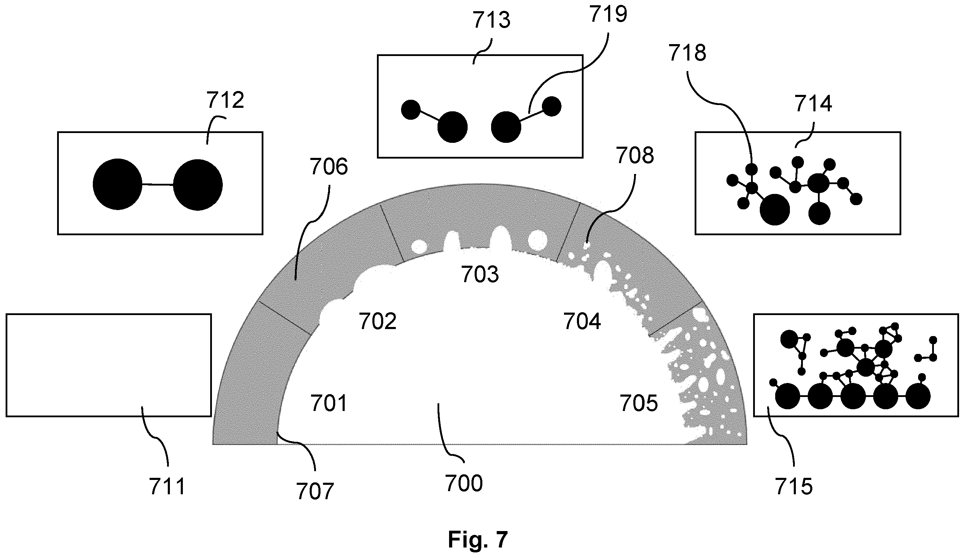

An infiltration pattern is then determined 105 for the region of interest by reference to the representation. Comparative examples of representations representing different infiltration patterns are shown in Figure 7.

Steps 103-105 are repeated for each region of interest. In the example shown, once an infiltration pattern has been determined 105 for each region of interest, the method 100 further comprises the step of identifying 106 a classification for the infiltration in the received image data by reference to the one or more infiltration patterns of the regions of interest. A recommendation is then generated 107 based on the classification. Exemplary recommendations may include a diagnostic prediction, a treatment regimen, a patient monitoring recommendation, or a combination thereof.

It will be understood that the steps in Figures 1(a)-(b) may be performed in a different order, or in parallel to each other, in other examples.

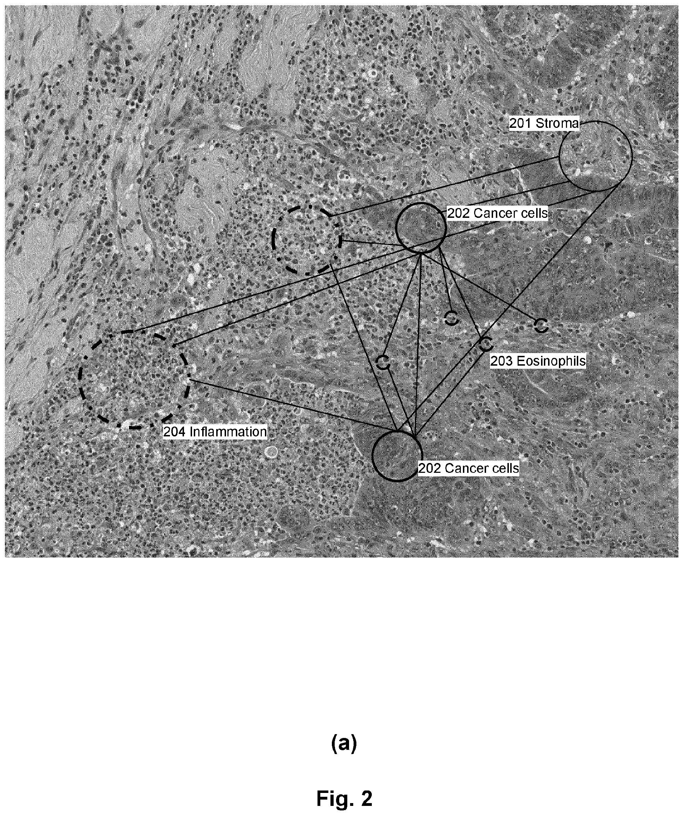

Figure 2(a) is a section of a Whole Slide Image (WSI) of stained tissue, which has been highlighted to show different cell and tissue types.

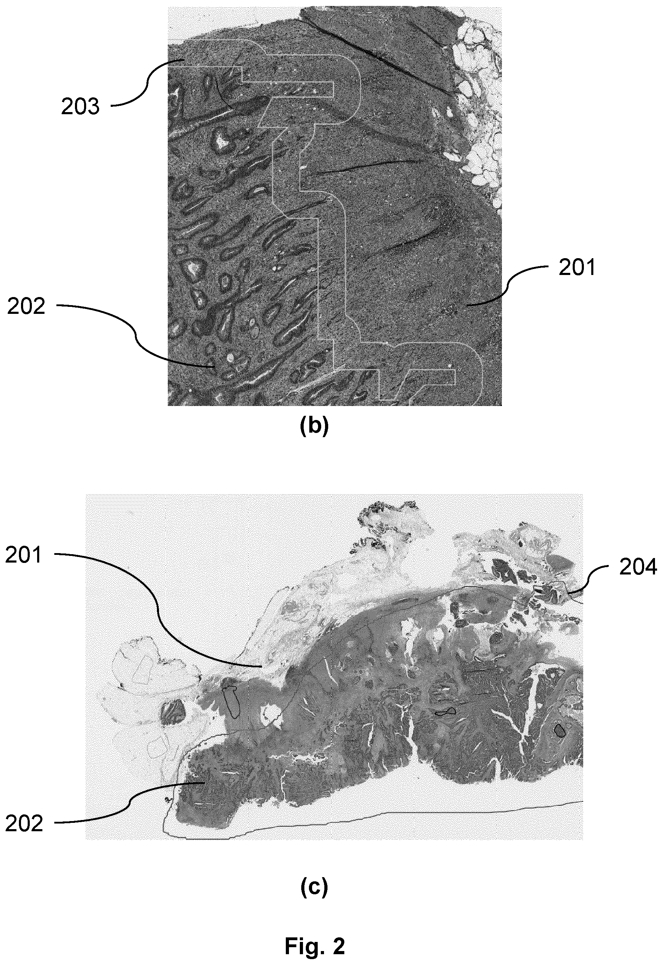

Figure 2(b) is a section of a WSI of stained tissue, showing healthy cells 201 on the right side of the image and malignant tumour cells 202 on the left side. The tumour edge region 203 is a niche composed of malignant cells 202 in the outermost boundary of the tumour, as well as non-malignant cells that are closely adjacent in spatial architecture, bridging these distinct spatial regions. In this example, the tumour edge region 203 is approximately 200 µm thick on average. The edge region 203 may be identified manually, or alternatively by using a tumour edge detection system which is configured to identify where a region of tumour cells 202 infiltrates a region of healthy cells 201.

Figure 2(c) shows another section of a WSI of stained issue, showing healthy cells 201 and tumour region 202. In the illustrated example, the edge 204 of the tumour region have been identified manually, that is, by a skilled expert. This edge 204 may be used to define the geometry of a tumour edge region.

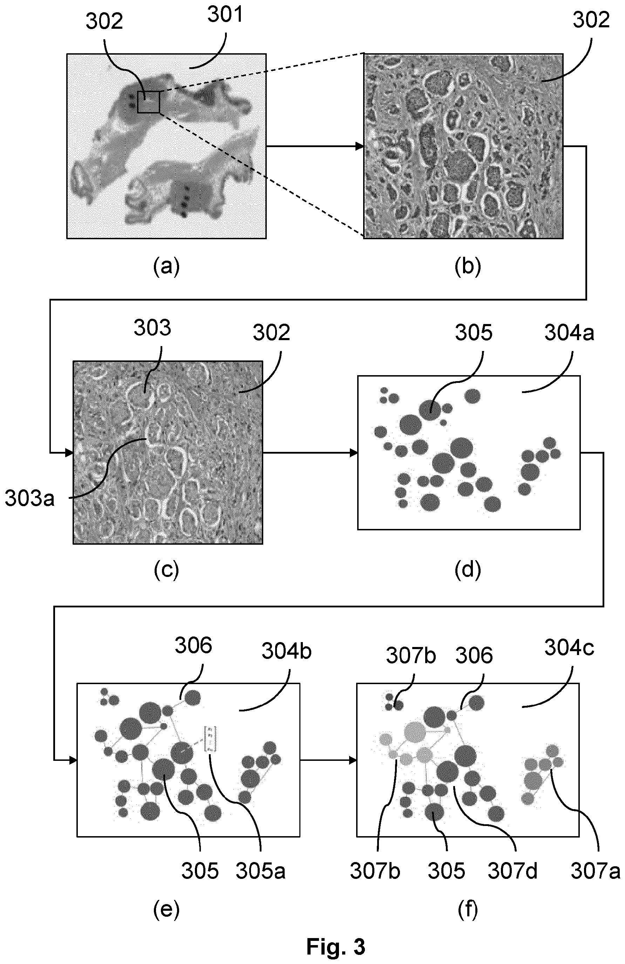

Figure 3 illustrates how a graph representation can be generated from image data. In this example, the received image data 301 is a high-resolution WSI. The whole image is shown in Figure 3(a). In this example, the WSI image data is obtained from a biopsy taken from a patient and it has been stained using conventional H&S techniques.

A region of interest 302 is identified in the image data 301. The region of interest 301 is shown in more detail in Figure 3(b).

Within the region of interest 302, the cells matching predetermined criteria are identified. Specifically, the tumour cells 303a have been highlighted as relevant cells in Figure 3(c), where they are distinguished from the surrounding cells or tissues. In this example, the tumour cells 303 can be distinguished based on visual and spatial features, specifically their colour, location and/or morphology..

An initial graph representation 304a can then be constructed based on the relative spatial locations of the tumour cells or tumour clusters 303a, as shown in Figure 3(d). Each node 305 in the initial graph representation 304a corresponds to either an individual tumour cell 303 or bud of densely-arranged tumour cells 303 in the region of interest 302. In this example, each node 305 is displayed as a circle with a size representing the relative size of the corresponding tumour cell 303 or bud. In other words, each node 305 visually encodes an additional feature of the corresponding tumour cell 303 or bud. In this example, a representation 304a is only constructed corresponding to the tumour cells 303. In other examples, representations may be constructed corresponding to the malignant and non malignant cells.

A final graph representation 304b is then constructed by drawing edges 306 between nodes 305. The edges 306 are constructed based on the relative spatial location of the one or more cells represented by each node 305. In this example, a thresholding approach is utilised, in which an edge 306 is drawn between a pair of nodes 305 only if the edges, centroids or other spatial feature of the corresponding pair of tumour cells 303 or buds is less than a predetermined threshold distance. Each node 305 has an associated embedding vector 305a representing visual features of the corresponding cells 303, such as the colour of the cells, the density and arrangement of the cells in a bud (if a bud is being represented), or the morphology of the cells (e.g. a roundness coefficient) or location features such as the cell 2d or 3d position in the sample. The embedding vector 305a also represents genomic data about the corresponding cells 303, such as the expression level of selected RNA sequences.

Different graphs might be constructed for different cell types or the same graph can contain nodes representing different cell types (e.g. tumour, eosinophis, lymphocytes, mucins, etc). This helps also study tumour and other cells' spatial arrangement relative to one another.

In the example shown, the intermediate graph representation 304b is further divided into sub-graphs 307a-d, resulting in the final graph representation 304c. The final graph representation 304c can then be processed in order to determine the infiltration pattern for the region of interest 302. This may involve displaying the final representation 304c on a screen to a user trained to identify and record an infiltration pattern associated with the final representation 304c. In some examples, the distinctiveness of the sub-graphs 307a-d may be enhanced for visual display to the user, e.g. by displaying the sub-graphs 307a-d in different colours. Alternatively, the final graph representation 304c may be processed using statistical or machine learning techniques in order to determine the infiltration pattern for the region of interest 302. The representation 304c may be processed as a whole, or alternatively its sub-graphs 307a-d may be processed in parallel or sequentially. In this example, a graph neural network is used to generate a set of numerical values indicating the infiltration pattern of the final graph representation 304c or generate a graph embedding that can be inputted into another classification system.

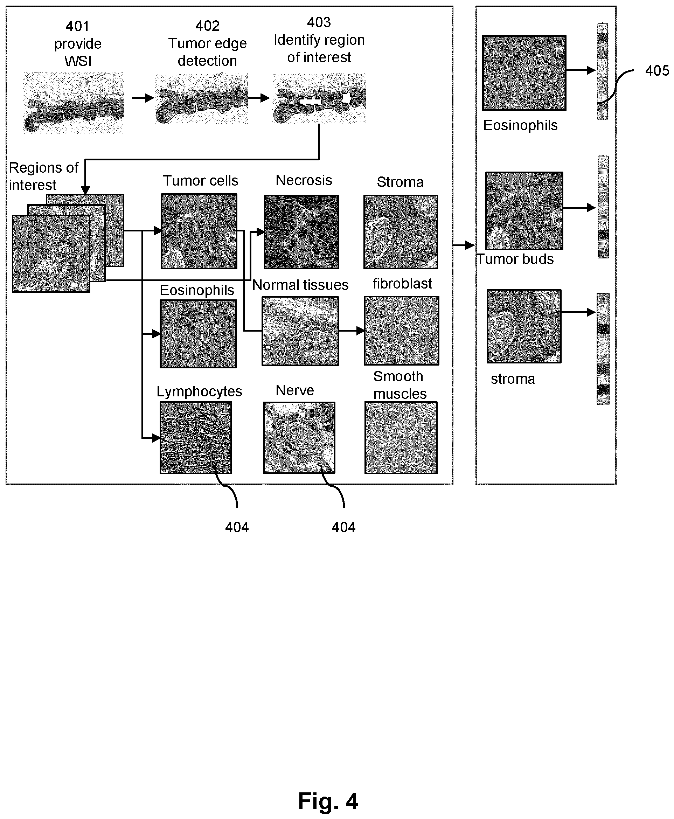

Figure 4 illustrates in more detail an example of how cells and tissues matching predetermined criteria within a region of interest can be identified within a Whole Slide Image using a machine learning system. It also shows a machine learning fingerprint representation for each modality of interest.

In a first step, a WSI is provided 401. Tumour edge regions are identified 402 manually or by means of a tumour edge region detection system. Within the tumour edge region, a plurality of regions of interest are identified 403 manually or using a region identification system.

For each region of interest, a cell/tissue identification system identifies and classifies cells/tissues based on their type 404. In Figure 4, the possible types 404 of cell/tissue are: tumour, necrosis, stroma, eosinophil, normal tissue, fibroblast, lymphocyte, neuron, or smooth muscle. Each cell type/tissue type 404 has identifiable visual and spatial characteristics which distinguish it from other cells/tissues. Embedding vectors 405 are generated for a subset of the classified cells, with each embedding vector representing visual, locational, molecular or genomic features of a subset of cells.

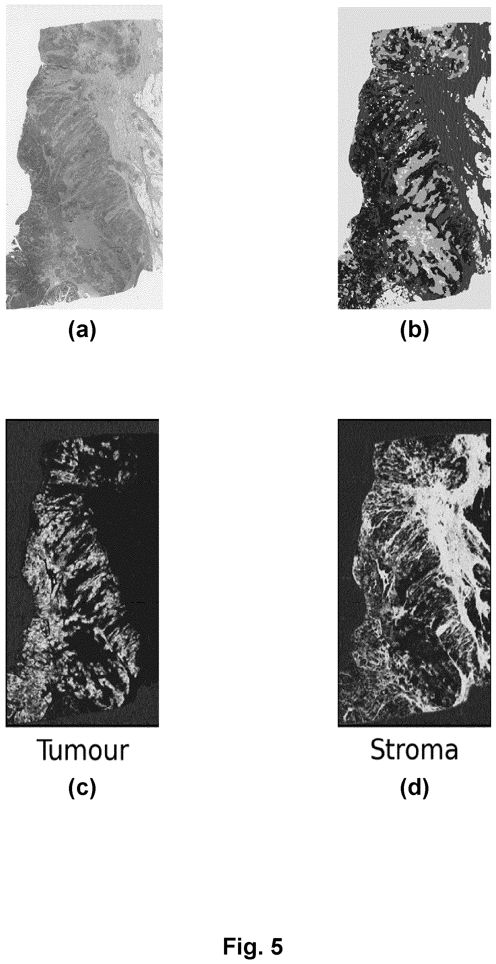

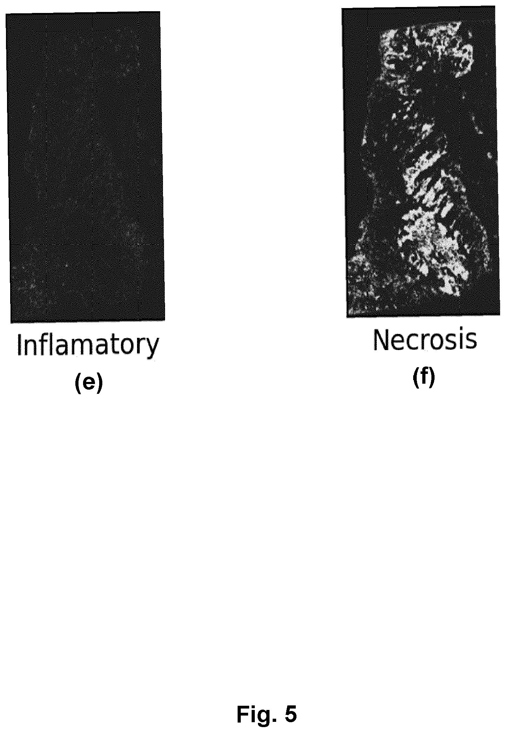

The cell identification system may be used to segment cells/tissue by type across the whole WSI. Following this, regions of interest are identified in the WSI. An example of a cell/tissue segmentation system is described in relation to Figure 5.

Figure 5(a) shows a WSI image. The different cell/tissue types identified by the cell/tissue type identification system have been colour-coded in Figure 5(b), and are shown individually in Figures 5(c)-(f). In each of Figures 5(c)-(f), a different colour indicates a different cell/tissue type.

Figure 5(c) shows the location of tumour cells, Figure 5(d) shows the location of stroma cells, Figure 5(e) shows the location of inflammatory tissue, and Figure 5(f) shows the location of necrosis. The locations of different cell/tissue types, as identified by the cell/tissue type identification system, may be used to determine the regions of interest within the image. For example, once the locations of tumour cells are identified as shown in Figure 5(c), regions of interest may be selected covering the periphery of these locations.

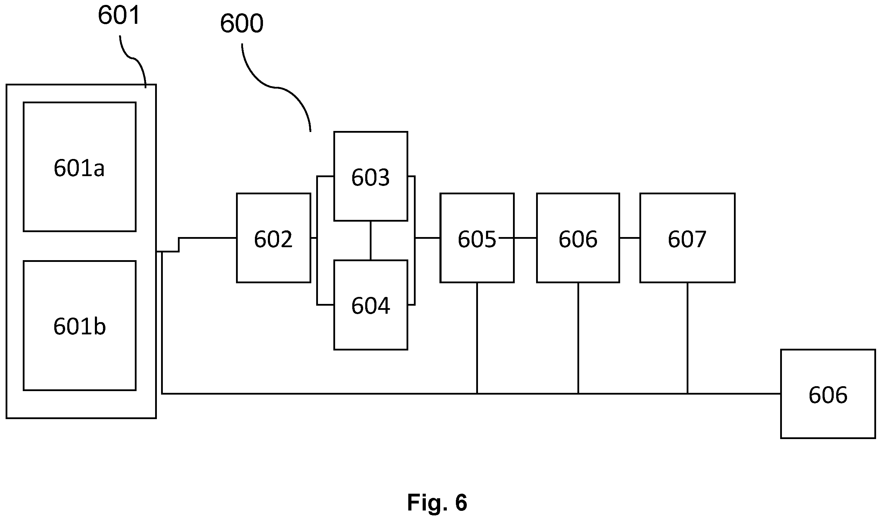

The architecture of an exemplary processing system 600 configured to carry out the method can be described in relation to Figure 6. The system 600 is configured to receive a dataset 601 comprising image data 601a and additional patient data 601b such as omics, medical history, as previously described. A pretrained region identification system 602 is configured to receive image data 601 from the dataset and identify regions of interest. Alternatively, regions of interest may be identified manually, for example by a human annotator. It then outputs information pertaining to the identified regions of interest (such as the boundaries of each region of interest in the image data) to a pretrained cell/tissue identification system 603 and a pretrained visual information identification system 604. Alternatively, cells and visual information may be identified manually. The cell/tissue identification system 603 is configured to identify relevant cells/tissues in the image data 601, i.e. cells in a region of interest which match predetermined criteria (e.g. being a tumour-type cell). The cell identification 603 system may also records the location of each relevant cell in the image. The visual information identification system 604 is configured to identify visual features of cells in the region of interest, that encodes colour, morphology, and density. The cell identification system 603 and visual information identification system 604 also exchange information with each other. For example, the cell identification system 603 uses the morphology of each cell, as identified by the visual information identification system 604, as an input when determining the cell type. The visual information identification system 604 receives a list of the relevant cells from the cell identification system 603, and generates an embedding vector representing visual features of each relevant cell. In some examples, functions of the cell identification system 603 and visual information identification system 604 may be performed by a single identification system, which may be configured to use the visual information to identify the cell type.

A representation generator 605 receives and combines the information from the cell identification system 603 and the visual information identification system 604, and generates a representation. The representation generator 605 may be part of the cell information identification system 603, such that the representation is generated as the cells are identified and classified. This representation may be sent to an output device 606 where it may be displayed or presented to a user for evaluation. Additionally, the representation is passed to a representation processor 606 which determines an infiltration pattern by reference to the representation. Alternatively, the representation may be passed to a learning system that models the local and global information of the representation. In some examples, the representation processor 606 may also receive other local and global features from the image. A recommendation engine 607 receives the infiltration pattern (or an encoding of the infiltration pattern) along with other patient data 601b, and generates a recommendation. The recommendation may include a diagnostic prediction, treatment regimen, or patient monitoring recommendation. The infiltration pattern identified by the representation processor 606 and the recommendation generated by the recommendation engine 607 are also passed to the output device for display to and evaluation by a user.

Turning to Figure 7, it can be seen how the aggressiveness of a tumour 700 may be determined from representations of edge regions 701-705 of the tumour 700. The edge regions 701-705 are the region in which the edge of the tumour 707 meets the surrounding tissue 706. As the aggressiveness of the tumour 700 increases or decreases, the infiltration pattern of one or more of its tumour edge regions may be altered. In this example, the edge regions 701-705 are increasingly aggressive and infiltrative.

Graph representations 711-715 are constructed corresponding respectively to the edge regions 701-705, for example using the method described in relation to Figure 3. The first tumour edge region 701 has a smooth and clearly delineated tumour edge 707, with no detached tumour cells/buds 708 visible within the tissue 706. This indicates a non-aggressive tumour. Since the nodes of the representations 711-715 correspond to such detached tumour cells/buds 708, the first representation 711 contains no nodes and is an empty graph. Alternatively, the representation 711 could contain only one node representing non malignant tissue. For subsequent tumour edge regions 702-705, the number of tumour cells/buds 708 in the tissue begins to increase, and the cells/buds 708 penetrate increasingly deeply into the surrounding tissue 706. This is reflected by the corresponding representations 712-715, in which the graphs become increasingly complex. There are more nodes 718 and edges 719, and increasingly more sub-graphs (a sub-graph may indicate a subset of tumour or inflammatory cells 708 has dispersed away from the main tumour region 700). In this example, and as with Figure 3, the size of the nodes 712 corresponds to the relative size of the corresponding tumour cell/bud 708. As the aggressiveness of the tumour increases, the representations 711-715 contain an increseing number of tumor buds,.

For simplicity, 700 represents only malignant cells. As mentioned earlier, the system can process other types of cells and combine that representation with tumour cells to also study malignant and non malignant cell interactions within the tumour region or the tumour edge.

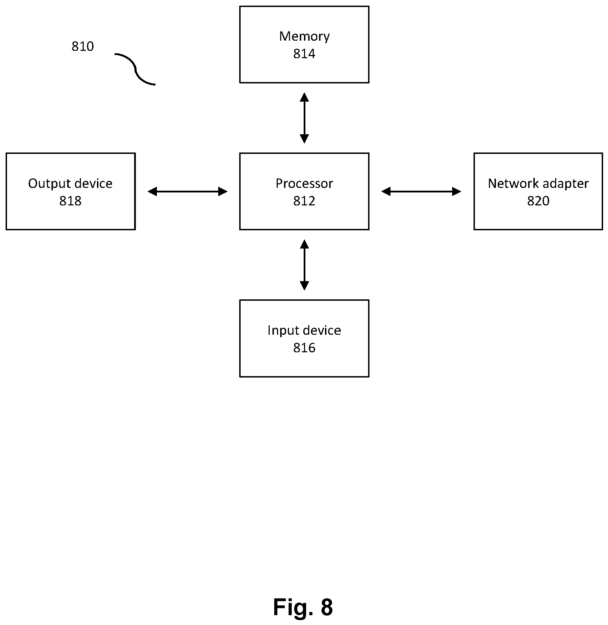

Figure 8 illustrates a schematic block diagram of a processing device for implementing the digital therapy. The processing device 810 comprises one or more processors 812 in communication with memory 814. The memory 814 is an example of a computer readable storage medium. The one or more processors 812 are also in communication with one or more input devices 816 and one or more output devices 818. The various components of the processing device 810 may be implemented using generic means for computing known in the art. For example, the input devices 816 may comprise a keyboard or mouse and the output devices 818 may comprise a monitor or display. The output devices 818 may be used to display one or more representations to user, who determines an infiltration pattern with reference to the displayed representations. The user may then record the infiltration pattern into the memory 814 using the input 816, for example by typing a code representing the infiltration pattern using the keyboard. Alternatively the processing device 810 may be configured to determine the infiltration pattern with reference to the one or more representations. The infiltration pattern may then be displayed to a user via the output devices 818.

In addition, the processing device 810 may comprise network access circuitry, such as a modem or network adaptor, to provide access to a network to obtain the image data and/or to transmit the determined infiltration pattern. Alternatively, a different data entry and/or recording means, such as a portable disc drive or data interface may be provided in addition to, or instead of, the network adaptor 820 to provide the image data to the processing device 810 and/or record the determined infiltration pattern.

It will be appreciated that, in some examples, the various hardware units may be integrated with one another. For example, where the processing device 810 is provided by a tablet computer or cellular telephone, a display of the device 810 may provide both the display of the output device 818 and a touch sensor providing the input device 816.

Exemplary embodiments include the following clauses:
1. A method of analysing tumours, the method comprising steps of:
   receiving image data of tissue;
   identifying in the image data one or more regions of interest in the tissue;
   for each region of interest:
      identifying one or more cells in the region of interest matching predetermined criteria;
      constructing a representation of the region of interest based on relative spatial locations of the one or more cells; and
      determining an infiltration pattern of the region of interest by reference to the representation.
2. The method of embodiment 1, wherein each region of interest comprises a tumour edge region.
3. The method of embodiment 1, wherein each region of interest comprises a tumour internal region.
4. The method of any preceding embodiment, wherein the representation comprises a graph structure, the graph structure comprising:
   a set of nodes, each node representing a subset of the one or more cells in the one or more identified regions; and
   a set of edges, each edge being constructed between a pair of nodes based on the relative spatial location of the one or more cells.
5. The method of any preceding embodiment, wherein the step of identifying one or more cells in the region of interest matching predetermined criteria comprises identifying a cell type for each cell.
6. The method of any preceding embodiment, further comprising a step of processing the image data by marking a cell type of cells or a tissue type of tissues in the image data.
7. The method of any preceding embodiment, further comprising a step of segmenting the tissue by identifying tissue modalities associated with the one or more identified cells.
8. The method of embodiment 6 or 7, wherein a representation is constructed for each cell type or tissue modality.
9. The method of any preceding embodiment, further comprising a step of identifying visual location, or genomic features of the one or more cells in the region of interest.
10. The method of embodiment 9, wherein the identified visual features of the one or more cells in the region of interest include one or more of: the morphology, density, colour, and arrangement of the cells.
11. The method of embodiment 9 or 10, further comprising a step of generating, for a subset of the one or more cells in the region of interest, an embedding vector representing one or more of the visual location, or genomic features of the subset.
12. The method of any of embodiments 9 to 11, wherein identifying visual features of the one or more cells from the image data comprises using a pretrained visual information identification system.
13. The method of any preceding embodiment, wherein the step of identifying regions of interest in the image data comprises processing the image data using a pretrained region identification system.
14. The method of any preceding embodiment, further comprising a step of identifying a tumour classification by reference to the one or more infiltration patterns of the regions of interest.
15. The method of embodiment14, further comprising a step of generating a diagnostic prediction based on the identified classification of the tumour.
16. The method of embodiment14 or 15, further comprising a step of generating a treatment regimen based on the identified classification of the tumour.
17. The method of any of embodiments 14 to 16, further comprising a step of generating a diagnostic or prognostic biomarker based on the identified classification of the tumour.
18. The method of any preceding embodiment, wherein the image data comprises images of stained tissue.
19. The method of any preceding embodiment, wherein the tissue or cell types are identified using a chemical stain.
20. The method of any preceding embodiment, wherein the image data comprises Whole Slide Image data.
21. The method of any preceding embodiment, wherein the image data is obtained from a patient biopsy or surgical resection.
22. A data processing device configured to carry out the method of any preceding embodiment.
23. A computer-readable storage medium comprising instructions which, when executed by a data processing device, cause the data processing device to carry out the method of any of embodiments 1-19.
24. A computer program comprising instructions which, when executed by a data processing device, cause the data processing device to carry out the method of any of embodiments 1 to 19.

## Claims

1. A method of analysing tumours, the method comprising steps of:
receiving image data of tissue;
identifying in the image data one or more regions of interest in the tissue;
for each region of interest:
identifying one or more cells in the region of interest matching predetermined criteria;
constructing a representation of the region of interest based on relative spatial locations of the one or more cells; and
determining an infiltration pattern of the region of interest by reference to the representation.

2. The method of claim 1, wherein each region of interest comprises a tumour edge region or a tumour internal region.

3. The method of any preceding claim, wherein the representation comprises a graph structure, the graph structure comprising:
a set of nodes, each node representing a subset of the one or more cells in the one or more identified regions; and
a set of edges, each edge being constructed between a pair of nodes based on the relative spatial location of the one or more cells.

4. The method of any preceding claim, wherein the step of identifying one or more cells in the region of interest matching predetermined criteria comprises identifying a cell type for each cell.

5. The method of any preceding claim, further comprising a step of segmenting the tissue by identifying tissue modalities associated with the one or more identified cells.

6. The method of claim 4 or 5, wherein a representation is constructed for each cell type or tissue modality.

7. The method of any preceding claim, further comprising a step of identifying visual location, or genomic features of the one or more cells in the region of interest, and optionally wherein the identified visual features of the one or more cells in the region of interest include one or more of: the morphology, density, colour, and arrangement of the cells, and further optionally comprising a step of generating, for a subset of the one or more cells in the region of interest, an embedding vector representing one or more of the visual location, or genomic features of the subset.

8. The method of claim 7, wherein identifying visual features of the one or more cells from the image data comprises using a pretrained visual information identification system.

9. The method of any preceding claim, wherein the step of identifying regions of interest in the image data comprises processing the image data using a pretrained region identification system.

10. The method of any preceding claim, further comprising a step of identifying a tumour classification by reference to the one or more infiltration patterns of the regions of interest, and optionally further comprising a step of generating a diagnostic prediction based on the identified classification of the tumour, and further optionally comprising a step of generating a treatment regimen based on the identified classification of the tumour.

11. The method of claim 10, further comprising a step of generating a diagnostic or prognostic biomarker based on the identified classification of the tumour.

12. The method of any preceding claim, wherein the image data comprises images of stained tissue or Whole Slide Image data.

13. A data processing device configured to carry out the method of any preceding claim.

14. A computer-readable storage medium comprising instructions which, when executed by a data processing device, cause the data processing device to carry out the method of any of claims 1-12.

15. A computer program comprising instructions which, when executed by a data processing device, cause the data processing device to carry out the method of any of claims 1 to 12.
